Europäisches Patentamt

European Patent Office

Office européen des brevets

(19)

(11) Veröffentlichungsnummer: **0 189 442**
**B1**

(12) # EUROPÄISCHE PATENTSCHRIFT

(45) Veröffentlichungstag der Patentschrift:
27.09.89

(51) Int. Cl.⁴: **A 23 L 3/22**, A 23 C 3/033

(21) Anmeldenummer: 85903217.9

(22) Anmeldetag: 03.07.85

(86) Internationale Anmeldenummer:
PCT/DE 85/00225

(87) Internationale Veröffentlichungsnummer:
WO 86/00503 (30.01.86 Gazette 86/3)

(54) VERFAHREN UND VORRICHTUNG ZUM SCHONENDEN ERWÄRMEN VON FLÜSSIGEN NAHRUNGS- UND GENUSSMITTELN.

(30) Priorität: 07.07.84 DE 3425088

(43) Veröffentlichungstag der Anmeldung:
06.08.86 Patentblatt 86/32

(45) Bekanntmachung des Hinweises auf die Patenterteilung:
27.09.89 Patentblatt 89/39

(84) Benannte Vertragsstaaten:
AT BE CH FR GB IT LI NL SE

(73) Patentinhaber: DALLINGA, Helmut, Am Utforter Graben 56, D-4130 Moers 1 (DE)

(72) Erfinder: DALLINGA, Helmut, Am Utforter Graben 56, D-4130 Moers 1 (DE)

(56) Entgegenhaltungen:
CH-A- 148 465
FR-A- 422 429
FR-A- 1 420 727
GB-A- 1 027 848
US-A- 2 024 255
US-A- 2 512 045
US-A- 2 547 430
US-A- 2 644 758
US-A- 3 567 470

American Dairy Science Association 79th Annual Meeting 24-27 June 1984, "supplement" 1,1984, JDS vol.no.67, Texas AGM University, College Station Texas(US) K.D. Wadsworth et al.:"An inexpensive system to deaerate and process ultra high temperature milk", see page 64 D 35 G, see abstract

(56) Entgegenhaltungen: (Fortsetzung)
Chemical Abstracts, vol. 56,no.7, 1962, Columbus, Ohio, USA N.Mastakov et al.:"Pasteurization of milk at high temperatures", column 7756d, see abstract
Voeding & Techniek, vol. 1 no. 7, 13 June 1967, L.G.W. Van Der Loo: "Aseptisch verpakken van porties gesteriliseerde koffieroom (II)", pages 191-192, see figure 4; page 192
Voedingsmiddelen Technologie, vol. 16, no. 13, June 1983 Zeist,(NL)W.F. Hermans et al.:"UHT-behandeling van koffiemelk", pages 20-21
Natuur en Techniek, 10 November 1917, De Nieuwe Amsterdammer P.van Olst:"Een belangrijke vinding op het gebied van melksterilisatie"

EP 0 189 442 B1

## Beschreibung

Die Erfindung betrifft ein Verfahren zum schonenden Erwärmen mit Hilfe von Wärmeaustauschern von Nahrungs- oder Genussmitteln (= NoG-Medien), insbesondere in flüssigem Zustand mittels eines Heizmediums sowie eine Vorrichtung zur Durchführung dieses Verfahrens mit einem beheizbaren Aufnahmemittel für das zu erwärmende NoG-Medium.

Wenn vor- oder nachstehend von einem «schonenden» Erwärmen die Rede ist, so soll hierunter jeweils eine solche Wärmebehandlung verstanden werden, bei welcher die vor der Wärmebehandlung vorhandenen Ausgangseigenschaften – und damit die Ausgangsqualität – möglichst nicht bzw. zumindest nicht beachtlich im Sinne einer Verschlechterung verändert werden, sondern möglichst zumindest weitgehend erhalten bleiben. Dabei sind mit den vorstehend erwähnten Ausgangseigenschaften beispielsweise Eigenschaften wie der Geschmack, der Vitamingehalt, der Bestandteil aromatischer Öle, Enzyme, Mineralstoffe etc. ebenso gemeint wie beispielsweise die Konsistenz bzw. der Aufbau ggfs. vorhandener Eiweissstoffe und dergleichen.

Wenn weiterhin vor- oder nachstehend von einem «Erwärmen» die Rede ist, so soll hierunter im vorliegenden Zusammenhang sowohl ein gleichsam moderates, kurzzeitiges Erwärmen verstanden werden, wie es beispielsweise bei einer Aufbereitung von Milch oder Milchprodukten häufig auf eine Temperatur von etwa 75 Grad C erfolgt, um die Haltbarkeit der Milch oder dergleichen zu erhöhen, als auch eine längere vergleichsweise noch moderate Erwärmung zu gleichem oder anderem Zwecke, wie sie beispielsweise im Falle von Milch bei einer Erwärmung auf 72 °C über einen Zeitraum von ca. 40 sec. erfolgt und in der einschlägigen Terminologie im allgemeinen unter dem Begriff «Pasteurisieren» bereits als sog. Kurzzeiterhitzung bezeichnet wird, als auch eine Erwärmung mit stärkerer Erhitzung, wie sie beispielsweise im Falle von Milch bei der sog. Ultrahocherhitzung auf 138 bis 150 °C erfolgt, um das NoG-Medium Milch zu sterilisieren und damit mit der so erhaltenen sog. «H-Milch» eine Milch zu erhalten, die über einen relativ langen Zeitraum haltbar ist, da man davon ausgehen kann, dass bei einer Erwärmung auf 138 °C – und ggf. noch darüber – sämtliche in einem NoG-Medium enthaltenen Keime – einschliesslich Sporen – abgetötet sind.

Wenn weiterhin vor- oder nachstehend von einem insbesondere «flüssigen» NoG-Medium die Rede ist, so sollen hierunter Medien wie Milch, flüssige Milchprodukte, Kakao, Kaffee, Blut etc. verstanden werden, für welche die vorliegende Erfindung in besonderer Weise bestimmt und geeignet ist, ohne hierauf etwa beschränkt zu sein, da sie sich unter Entfaltung entsprechender Vorteile auch – wie für den einschlägigen Fachmann ohne weiteres erkennbar ist – beispielsweise auf pasteuse NoG-Medien wie beispielsweise industriell gefertigte Pudding-Creme, Spinat oder andere Gemüse etc. anwenden lässt, aber darüber hinaus auch auf im allgemeinen als «fest» bezeichnete NoG-Medien wie z.B. Kartoffeln etc., wie sich aus den nachstehenden Ausführungen noch im einzelnen ergibt.

Wie bereits ausgeführt worden ist, ist die vorliegende Erfindung in besonderer Weise für Nahrungsmittel wie Milch oder Milchprodukte bestimmt und geeignet, während bzgl. geeigneter Genussmittel insbesondere auf Kaffee zu verweisen ist, und zwar hier wiederum insbesondere die Herstellung von Kaffee-Extrakt bzw.-Konzentrat als Zwischenprodukt für die Herstellung von (im allgemeinen gefriergetrocknetem) sog. Pulverkaffee.

Wenn schliesslich vor- oder nachstehend von einem «Heizmedium» die Rede ist, so soll hierunter jedes für das jeweilige NoG-Medium geeignete Heizmedium verstanden werden, mit dem das NoG-Medium in besonders zweckmässiger Weise zu erwärmen ist, und zwar insbesondere und demgemäss bevorzugt indirekt, da eine direkte Erwärmung (beispielsweise durch das Einblasen von Heissdampf) in aller Regel nicht zu einer schonenden Erwärmung im Sinne der obigen Definition und darüber hinaus zwangsläufig zu einer – zumindest vorübergehenden – Verdünnung des NoG-Mediums führt, die sich im allgemeinen in negativer Weise auf die Qualität bzw. zumindest einzelne Eigenschaften eines NoG-Mediums auswirkt.

Eine Erwärmung von NoG-Medien findet zu unterschiedlichen Zwecken bzw. mit unterschiedlicher Zielsetzung statt, nämlich beispielsweise um die Haltbarkeit zu erhöhen (z.B. bei Milch) oder aber um bestimmte Konzentrate zu schaffen (z.B. Kaffe-Extrakt für die Herstellung von Pulverkaffee) oder beispielsweise zum Garen (z.B. Gemüse, Kartoffeln), wobei auch mehrere der vorgenannten oder ggf. weiterer Zielsetzungen gleichzeitig auftreten können. In jedem Falle besteht der dringende Wunsch, die Ausgangseigenschaften bzw. -qualität nicht oder möglichst wenig zu verschlechtern, wie dieses anhand verschiedener Beispiele oben bereits erläutert worden ist.

Auf verschiedene bekannte Verfahren zum Erwärmen von Milch und Milchprodukten zum Zwecke der Erzielung einer besseren Haltbarkeit ist oben bereits verwiesen worden, wobei noch nachzutragen wäre, dass die erwärmte Milch od. dgl. – unabhängig davon, auf welche Temperatur und über welchen Zeitraum sie erwärmt worden ist – üblicherweise vor dem anschliessenden Verpacken in Flaschen, Beutel, Kartons od. dgl. auf die sog. Abpacktemperatur abgekühlt wird. Da die Temperatur des Heizmediums logischerweise oberhalb der grössten während der Aufbereitung erzielten Temperatur des NoG-Mediums (hier also beispielsweise Milch) liegen muss, wird als geeignetes Heizmedium üblicherweise Heisswasser oder Sattdampf eingesetzt, wobei das Heizmedium im Falle von Milch aber auch i.d.R. bei sonstigen NoG-Medien nicht unmittelbar bzw. direkt mit dem NoG-Medium in Berührung gebracht wird, sondern mittelbar bzw. indirekt, also im allgemeinen unter Verwendung von Erhitzern bzw. Wärmeaustauschern, bei denen es sich im allgemeinen um sog. Röhren-Wärmeaustauscher o.ä. handelt, wobei beispielsweise die Milch durch die Röhren strömt und das Heizmedium aussen an den Röhren entlang oder umgekehrt. Nun ist aber bekanntlich die Strömungsgeschwindigkeit in einem solchen Wärmeaustauscher od. dgl. nicht überall gleich. Vielmehr ist sie schon aufgrund von Reibungserscheinungen an den Rohrwandungn kleiner als in der Rohrmitte und bei Rohrbögen am Innenbogen anders als am Aussenbogen. Entsprechendes gilt auch beispielsweise für sog. Platten-Wärmeaustauscher, bei denen die Wärmeaustauschflächen bekanntlich nicht mit gleicher Geschwindigkeit beaufschlagt werden. Das hat aber zur Folge, dass es zumindest stellenweise zum Sieden des NoG-Mediums kommt, wobei bekanntlich an denjenigen Stellen eine Bläschenbildung einsetzt, die zu einer äusserst schlechten Wärmeübertragung und damit zu dem Ergebnis führt, dass an den betreffenden Stellen von dem zu erwärmenden NoG-Medium nicht genügend Wärme abgeführt wird, wenn das NoG-Medium einen solchen Wärmeaustauscher mit einer realistischen Geschwindigkeit durchströmt, die bekanntlich nicht beliebig gross gemacht werden kann. Aufgrund derartiger Wärmestaus kommt es dann aber bei NoG-Medien wie beispielseise Milch zu den bekannten Ansatzerscheinungen und alsbald zum sog. Anbrennen, wie dieses vom Erwärmen von Milch in einem Kochtopf her jedermann bekannt ist. Dabei werden aber u.a. die in der Milch enthaltenen Eiweissstoffe, Vitamine, Enzyme, Mineralstoffe etc. zum grossen Teil irreversibel in nachteiliger Weise verändert und es kommt darüber hinaus vor allem auch – abgesehen davon, dass derartige Erscheinungen zu äusserst niedrigen Standzeiten entsprechender Anlagen inder Grössenordnung von lediglich zehn bis zwanzig Stunden mit dem Erfordernis einer jeweiligen gürndlichen Reinigung führen – zu erheblichen negativen Geschmacksveränderungen, die zumindest überwiegend auch nach anschliessender Abkühlung bestehen bleiben.

Entsprechend negative Erscheinungen treten auf bei Milchprodukten, aber auch bei anderen NoG-Medien, bei denen es beim Erwärmen zu einem Zersetzen von Eiweissstoffen oder sonstigen Bestandteilen, Vitaminen, Enzymen, Mineralien etc. und sehr häufig auch zu erheblichen geschmacklichen Beeinträchtigungen gegenüber dem Ausgangsprodukt kommt, also zu Veränderungen, die insgesamt im allgemeien in höchstem Masse unerwünscht sind.

Der vorliegenden Erfindung liegt demgemäss die Aufgabe zugrunde, die bekannten Verfahren und Vorrichtungen der eingangs beschriebenen Gattung unter Vermeidung ihrer vorgenannten und weiterer Nachteile dahingehend zu verbessern, dass mit ihnen eine schonende Erwärmung von NoG-Medien möglich ist, ohne dass es zu Ansatz- und Anbrennerscheinungen mit den entsprechenden nachteiligen Wirkungen kommt, und ohne dass es zu einer übermässigen negativen Veränderung der Bestandteile des betreffenden NoG-Mediums und zu einer nennenswerten Verminderung des Geschmackgenusses kommt. Zumindest sollen die bisher auftretenden nachteiligen Erscheinungen gegenüber den bisherigen Möglichkeiten beachtlich vermindert und die Qualität des erhaltenen Endproduktes entscheidend verbessert werden.

Als Lösung des verfahrensmässigen Teils dieser Aufgabe ist erfindungsgemäss vorgesehen, dass das zu erwärmende Medium vor und während dem Erwärmen unter einen Arbeitsdruck gesetzt wird, der wenigstens so gross ist wie derjenige Dampfdruck, den das NoG-Medium bei der höchsten auftretenden Temperatur des Heizmediums aufweist.

Aus der FR-A-1 420 727 ist ein Verfahren zum Sterilisieren von Milch bekannt geworden, bei dem die Milch im Temperaturbereich über 100 °C fest auf einen Druck von 7 bar eingestellt wird, um dieselbe dann bei 100 °C zu atomisieren. Da in der Druckschrift keine Angaben über die tatsächlich im Heizmedium angewandten Temperaturen gemacht sind und auch keine aussagekräftigen Angaben über das Verhältnis Druck des Heizmediums zu NoG-Medium der Druckschrift zu entnehmen sind, konnte dieser Schrift auch keine Anregung zum Auffinden der erfindungsgemässen Lehre entnommen werden. Im Gegenteil, es ist zu erwarten, dass bei dem bekannten Vorschlag bei den hohen Temperaturen und noch dazu im Vakuum elementare Schädigungen des Produktes auftreten, die gerade die vorliegende Erfindung zu vermeiden sucht.

Eine weitere Veröffentlichung, die sich mit der Haltbarkeitsprüfung von hocherhitzter Milch in Abhängigkeit von Zeit und Temperatur befasst (American Dairy Sience Ass. 97th Annual Meeting, Supplement 1 (1984) IDS, Band 67, Seite 63) ist ebenfalls nicht geeignet, den Gedanken der vorliegenden Erfindung vorzuzeichnen. Bei dem dort vorgeschlagenen Verfahren ist offenbar der Druck für den Hocherhitzungsbereich willkürlich gewählt; ein Bezug auf die Temperatur des Heizmediums fehlt ebenso wie ein druckgesteuerter Wärmeaustausch von Produkt gegen Produkt. Die angegebene Kombination von Druck und Vakuum widerspricht sogar dem erfindungsgemässen Verfahren.

Auch die vorveröffentlichte US-A-3 567 470 stellt nicht darauf ab, das NoG-Medium vor dem Erwärmen mit einem Druck zu beaufschlagen, der wenigstens so hoch ist, wie er der höchsten auftretenden Temperatur des Heizmediums entspricht. Dazu wäre es erforderlich, bei 24 und 14 gemäss Zeichnungsfigur einen höheren Druck als bevorzugt 30 psig einzustellen, mindestens 55 psig. Die Lehre der Erfindung wurde also nicht erkannt. Auch die Verwendung einer Vakuumkammer zum Entfernen der beim Erhitzungsprozess entstehenden unangenehmen Geruchs- und Geschmacksstoffe deutet darauf hin, dass hier ein völlig anderer Weg als die Erfindung beschritten wird.

Die vorstehenden Ausführungen gelten in gleichem Masse auch für die Veröffentlichung im Chem. Abstracts, Band, 56, Nr. 7 (1962) Nr. 7756d. Auch hier wird mit einem Erfahrungswert im Erhitzungsbereich ab 100 °C gearbeitet, so dass die erfindungsgemässe Verfahrensidee nicht berührt wird.

Gleiches gilt für eine Veröffentlichung in Voeding und Technik, Band 1, Nr. 7, Seiten 191–192, wo eine Verbesserung des Homogenisierungseffektes von Kaffeemilch durch zweistufiges Homogenisieren bei 120 und 35 bar angestrebt wird. Hinweise auf die erfindungsgemässe Verfahrensidee sind auch dieser Druckschrift nicht zu entnehmen.

Erfindungsgemäss wurde nämlich u.a. erkannt, dass es beispielsweise bei einem Erwärmen von Milch – und zwar selbst beim sogenannten Ultrahocherhitzen auf 138 Grad C und mehr – nicht mehr zu Ansatzerscheinungen und dem sich in Folge einstellenden Anbrennen kommt, wenn durch geeignete Massnahmen dafür Sorge getragen wird, dass es zu keinem Zeitpunkt und an keiner Stelle zu Siedeerscheinungen mit der hiermit verbundenen Bläschenbildung, dem daraus resultierenden schlechten Wärmeübergang und dem sich hieraus zwangsläufig ergebenden Wärmestau kommen kann.

Darüber hinaus wurde u.a. weiterhin erkannt, dass Veränderungen der Bestandteile zu erwärmender NoG-Medien geringfügiger sind bzw. überhaupt icht in einem beachtlichen Umfange auftreten, wenn das betreffende NoG-Medium bei einer bestimmten Temperatur unter einen relativ hohen Druck gesetzt wird.

Nun lehrt die vorliegende Erfindung im Rahmen ihres Basisgedankens aber nicht etwa (nur), dass das zu erwärmende NoG-Medium beim Erwärmen überhaupt unter einen Druck gesetzt werden soll (der grösser ist als der Atmosphärendruck der Umgebung), und ebenfalls nicht (nur), dass der Arbeitsdruck wenigstens so gross sein soll, wie er dem jeweiligen Dampfdruck der (durchschnittlichen) momentanen Betriebstemperatur des NoG-Mediums entspricht, sondern, dass der Arbeitsdruck wenigstens so gross und vorzugsweise zumindest etwas grösser sein soll als der Dampfdruck der höchsten Betriebstemperatur des Heizmediums, welche diese im Bereich der Wärmebehandlung aufweist, wie weiter unten noch im einzelnen erläutert wird. Soll also beispielsweise Milch im Wege der sog. Ultrahocherhitzung auf 140 °C erwärmt werden, so wird der Arbeitsdruck bei der Erwärmung der Milch erfindungsgemäss nicht etwa auf den bisher vorgegebenen Endtemperatur entsprechenden Dampfdruck eingestellt, sondern es wird bei der Wahl des Arbeitsdruckes für die Milch auf die (Maximal-)Temperatur des Heizmediums abgestellt. Handelt es sich hierbei beispielsweise um Heisswasser einer Anfangs- und damit Maximaltemperatur von 156 °C, der ein Dampfdruck von ca. 5,6 bar entspricht, so wird der Arbeitsdruck auf wenigstens 5,6 bar – vorzugsweise zumindest etwas mehr – eingestellt, wobei dieser Arbeitsdruck ersichtlich beachtlich höher ist als der der vorgegebenen Enderwärmungstemperatur von 140 °C entsprechende Dampfdruck bzw. einem Druck der grösser ist als der Verflüchtigungsdruck der in den zu erwärmenden NoG-Medien zu erhaltenden flüchtigsten Komponente, bei der höchsten Temperatur, welcher die NoG-Medien beim Erwärmen ausgesetzt sind. Dieses hat ersichtlich zur Folge, dass es zu keinem Zeitpunkt und an keiner Stelle zu Siedeerscheinungen der Milch kommen kann, mit der sich hieraus ergebenden Folge, dass es auch nicht zu der bei Siedeerscheinungen auftretenden Bläschenbildung und der sich hieraus wiederum ergebenden pneumatischen Verschlechterung des Wärmeübergangs und damit zu entsprechenden Wärmestaus mit der Folge zu Ansatz- und Anbrennerscheinungen kommen kann.

Darüber hinaus hat sich auch gezeigt, dass beispielsweise Veränderungen der Eiweissstoffe sowie weitere Bestandteile von Milch nicht nur von der Temperatur abhängen, sondern auch von dem bei einer bestimmten Temperatur herrschenden Druck, und zwar derart, dass bei einem höheren Arbeitsdruck als dem Dampfdruck der jeweiligen Temperatur der Milch entsprechenden Druck die oben bereits wiederholt angeführten Veränderungen erheblich geringer sind. Vor allem kommt es aber bei einer erfindungsgemässen Behandlung nicht zu dem bekannten sog. Kochgeschmack, der häufig auch Geschmackskomponenten aufweist, die vom Anbrennen herrühren, sowie anderen nachteiligen Geschmackveränderungen, so dass die natürliche Qualität der eingesetzten Frischmilch weitgehend erhalten bleibt, zumindest aber gegenüber bisherigen Behandlungsmethoden geradezu unglaublich verbessert wird, wenn die Milch einer erfindungsgemässen Behandlung unterworfen wird. Gleiches bzw. entsprechendes gilt für andere NoG-Medien. So kommt es beispielsweise beim Garen von Gemüsen, Kartoffeln etc. bei Anwendung des erfindungsgemässen Verfahrens zu erheblich reduzierten geschmacklichen Veränderungen gegenüber bisherigen Garungsverfahren. Beim Herstellen von Kaffee-Extrakt od.dgl. verbleiben in dem Kaffee-Extrakt erheblich mehr Aromastoffe als dieses bisher der Fall ist etc.

Bei durchgeführten Versuchen mit organischen Stoffen wurde bei unterschiedlichen Drücken festgestellt, dass für die Aufheizung von gleichen Stoffen um dieselbe Temperaturdifferenz eine bis zu 25% unterschiedliche Wärmemenge erforderlich war. Die Siedepunkte der Stoffe wurden dabei nicht erreicht, so dass die Verdampfungswärme durch Sieden keine Rolle spielen konnte.

Da eine Veränderung der spezifischen Wärme aus naturgesetzlichen Gründen ebenfalls nicht anzunehmen war, mussten andere Effekte für dieses Phänomen eine Rolle spielen. Es zeigte sich bei gleichen Stoffen ein unterschiedlicher Wärmebedarf. Es fiel auf, dass bei gesteigertem Wärmebedarf (bei geringeren Gegendrücken) nach der Wärmeanwendung ein Vielfaches an denaturierten Zellen auftrat.

Gesagt muss allerdings werden, dass durch verfahrenstechnische Massnahmen bei den vergleichbaren Stoffen mit geringerer Wärmeaufnahme thermodynamische Entwicklungen auf Grund von Zustandsänderungen (durch hohe Gegendrücke) so gut wie ausgeschlossen wurden. Es gab nur eine Erklärung, die dann auch nachgewiesen werden konnte: In organischen Stoffen befinden sich Stoffe, die bei Temperaturerhöhung plötzlich ihren Zustand von flüssig oder fest in gasförmig ändern.

Im Bereich um 41 °C und atmosphärischem Druck ist die Zustandsänderung solcher Inhaltsstoffe besonders heftig mit steigender Tendenz bei ansteigender Temperatur. Auch wenn diese Stoffe nur eine unbedeutende Masse darstellen, vergrössern sie ihr Volumen bei Zustandsänderungen um etwa das Tausendfache, wodurch je nach Stoffwechsellage Zellen bzw. Gewebe oder Strukturen von innen überdehnt und zerstört werden können.

Bei thermischer Behandlung von organischen Stoffen ist bei überhöhtem Druck (entsprechend Anspruch 1) die Keimabtötung wirkungsvoller.

Mit steigendem Druck werden auch die gasförmigen Anteile in den organischen Stoffen verringert, wodurch die Wärmeleitfähigkeit gesteigert wird. Dadurch können die Wärmeaustauschflächen kleiner ausgelegt werden. Dieses führt zu geringerer Verweildauer der thermisch zu behandelnden NoG-Medien in den Erhitzungsanlagen, woraus wiederum eine schonendere Behandlung resultiert.

Wie weiter oben bereits angedeutet worden ist, besteht eine bevorzugte Ausgestaltung der vorliegenden Erfindung darin, dass der Arbeitsdruck zumindest etwas grösser eingestellt wird als derjenige Dampfdruck, den das NoG-Medium bei der höchsten auftretenden Temperatur des Heizmediums aufweist. Diese Arbeitsweise empfiehlt sich schon deshalb, um unter Berücksichtigung vorhandener Toleranzen von Mess- und Steuereinrichtungen bei Anwendung des erfindungsgemässen Verfahrens stets «auf der sicheren Seite» zu sein. Sie empfiehlt sich weiterhin auch deshalb, weil – wie ausgeführt – Veränderungen von Bestandteilen von NoG-Medien bei bestimmten Temperaturen unter erhöhten Drücken geringer sind als bei niedrigen Drücken, so dass es in verschiedenen Fällen auch vorteilhaft sein kann, wenn der Arbeitsdruck erheblich grösser eingestellt wird als der Dampfdruck, den das NoG-Medium bei der höchsten auftretenden Temperatur des Heizmediums aufweist, so dass es schon aus diesem Grunde zweckmässig und demgemäss zu bevorzugen ist, wenn der Arbeitsdruck variabel bzw. einstellbar ist, was in zahlreichen Anwendungsfällen darüber hinaus den Vorteil mit sich bringt, dass mit ein und derselben Anlage auch unterschiedliche NoG-Medien gefahren werden könnten.

Die Druckbeaufschlagung eines NoG-Mediums kann grundsätzlich auf beliebige Art und Weise erfolgen, also beispielsweise durch ein flüssiges, gasförmiges oder ein mechanisches Druckmittel oder aber auch durch eine Kombination, wobei sich indes, wie für den einschlägigen Fachmann ohne weiteres ersichtlich ist, für bestimmte NoG-Medien bestimmte Druckmittel besonders eignen. Im Falle einer Druckbeaufschlagung mittels eines unter Druck stehenden Gases, bei dem es sich grundsätzlich beispielsweise um (ggfs. gereinigte) Luft handeln kann, hat sich ein Inertgas, vorzugsweise Stickstoff oder ein Edelgas, besonders bewährt, da bei Verwendung eines unter Druck stehenden Inertgases als Druckmittel keinerlei Beeinträchtigung des NoG-Mediums zu befürchten ist.

Der vorrichtungsmässige Teil der obigen Aufgabe wird erfindungsgemäss dadurch gelöst, dass das beheizbare Aufnahmemittel für das zu erwärmende NoG-Medium, bei dem es sich je nach Ausbildung der Anlage um eine Leitung bzw. ein Leitungssystem oder aber auch um ein Behältnis handeln kann, in an sich bekannter Weise mit wenigstens einem Wärmeaustauscher in Verbindung steht und mittels eines Druckerzeugers unter einen Arbeitsdruck zu setzen ist, der wenigstens so gross ist wie derjenige Dampfdruck, den das NoG-Medium bei der höchsten im Bereich des Wärmeaustauschers auftretenden Temperatur des Heizmediums aufweist.

Im Falle von Flüssigkeiten wie beispielsweise Milch, kann es sich bei dem Druckerzeuger bevorzugt um eine Pumpe handeln, mittels welcher die Milch oder dergleichen – über eine geeignete Erwärmungs- und ggfs. nachgeschaltete Kühleinrichtung – einer Abpackstation zugeführt wird, wobei die Pumpe so angeordnet ist, dass das NoG-Medium mit ihr vor seiner Erwärmung unter Druck zu setzen ist.

Gemäss einer Variante der vorliegenden Erfindung kann es sich bei dem Druckerzeuger aber auch um eine unter Druck stehende Gasquelle handeln bzw. kann er eine solche aufweisen, aus welcher das Aufnahmemittel (beispielsweise ein Behältnis) mit unter einem vorgegebenen Druck stehenden Gas, vorzugsweise Inertgas, zu beaufschlagen ist, wobei der Arbeitsdruck aus den bereits genannten Gründen bevorzugt veränderbar sein kann.

Statt eines einzigen Wärmeaustauschers können in Ausgestaltung der vorliegenden Erfindung zweckmässigersweise auch mehrere Wärmeaustauscher vorhanden sein, wobei sich eine derartige Ausgestaltung schon deswegen als zweckmässig herausgestellt hat, weil auf diese Art und Weise das (zuvor) in einem (ersten) Wärmeaustauscher auf eine vorgegebene Endtemperatur erwärmte NoG-Medium zumindest einen beträchtlichen Teil seiner fühlbaren Wärme im Wege einer Vorerwärmung an das dem ersten Wärmeaustauscher zuzuführende, noch nicht hocherwärmte NoG-Medium abgeben kann, so dass man auf diese Art und Weise zu einer beträchtlichen Wärmerückgewinnung und demgemäss einer entsprechenden Energieeinsparung kommt. Eine solche Ausgestaltung ist aber nicht nur unter Energiegesichtspunkten sehr vorteilhaft, sondern kann in verschiedenen Fällen zur Folge haben, dass man auf ein Kühlen weitgehend oder vollständig verzichten kann, so dass man die hiermit verbundenen Energieverluste nicht hat und auf eine entsprechende Investition sowie entsprechende Betriebskosten für ein Kühlmittel verzichten bzw. diese vermeiden kann. Dabei stehen auch bei einer Ausgestaltung mit mehreren Wärmeaustauschern die weiteren Wärmeaustauscher bevorzugt unter dem Arbeitsdruck des ersten Wärmeaustauschers.

Bevorzugte Ausgestaltungen der vorliegenden Erfindung sind in den Unteransprüchen beschrieben.

Die Erfindung ist nachstehend an einem Ausführungsbeispiel unter Bezugnahme auf eine Zeichnung weiter erläutert. Es zeigt:

Fig. 1 eine schematische (Schaltplan-) Darstellung einer Vorrichtung bzw. Anlage zum Erwärmen von Milch durch sog. Ultrahocherhitzung, bei welcher das Aufnahmemittel für die Milch durch ein Leitungssystem gebildet ist und der Druckerzeuger als Pumpe bzw. Homogenisiereinrichtung ausgebildet ist;

Fig. 2 eine Vorrichtung bzw. Anlage zum Erwärmen eines Milchproduktes wie beispielsweise Pudding-Creme, bei welcher das Aufnahmemittel für das Milchprodukt als Behälter ausgebildet und der Druckerzeuger als Inertgasquelle ausgebildet ist; und

Fig. 3 eine etwas schematisierte Darstellung eines Wärmeaustauschers für die Vorrichtungen gemäss den Fig. 1 und 2.

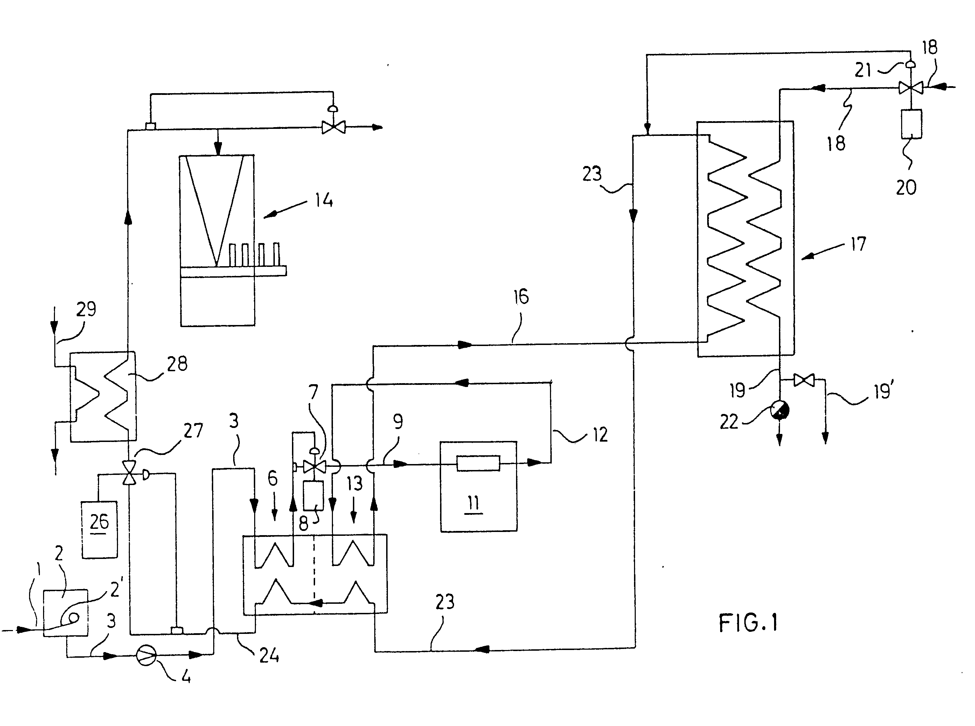

Fig. 1 zeigt in schematischer Darstellung, nämlich in einem teilweise als Blockschaltbild ausgebildeten Schaltplan, eine Vorrichtung bzw. Anlage zum Erwärmen von Milch, und zwar durch sog. Ultrahocherhitzung auf 140 °C, wie sei bei der sog. H-Milch-Herstellung üblich ist, um durch Abtöten sämtlicher Keime eine Langzeithaltbarkeit von Milch zu erzielen. Obwohl die Darstellung gemäss Fig. 1 möglicherweise zu dem Schluss führen könnte, dass es sich hierbei ausschliesslich um eine aus diversen Bauteilen bzw. Baueinheiten bestehende Anlage handelt, deren einzelne Teile durch unterschiedliche Leitungen miteinander verbunden sind, sei ausdrücklich darauf verwiesen, dass die Realisierung des Gegenstandes gemäss Fig. 1 auch in einer geschlossenen, kompakten Vorrichtung möglich ist, wobei die tatsächliche technische Ausbildung vom jeweiligen Anwendungsfall abhängt und ausser von den jeweiligen Gegebenheiten u.a. vom Durchsatz abhängig sein kann.

Bei der Vorrichtung oder Anlage gemäss Fig. 1 wird die zu erwärmende Milch einem Vorlauf-Schwimmergefäss 2 über eine Zuführleitung 1 zugeführt. Das Vorlauf-Schwimmergefäss 2 steuert den Milchzulauf bzw. Durchlauf durch die Vorrichtung in an sich bekannter Weise durch Niveauregelung mittels eines Schwimmers 2'.

Aus dem Vorlauf-Schwimmergefäss 2 gelangt die Milch über eine Leitung 3 zu einer Vorlauf-Pumpe 4 und von dort über einen weiteren Abschnitt der Leitung 3 zu einem Wärmeaustauscher 6, in dem die der Vorrichtung in gekühltem Zustand mit einer Temperatur von 5 °C zulaufende Milch bei dem dargestellten Ausführungsbeispiel auf 75 °C erwärmt wird. Dabei dient als Wärmemedium die in einem nachgeordneten Teil der Vorrichtung auf 140 °C erwärmte Milch, welche den Wärmeaustauscher 6 im Gegenstrom zu der durch die Leitung 3 strömenden, zu erwärmenden Milch durchströmt, wie weiter unten noch erläutert ist.

Die den Wärmeaustauscher 6 mit einer Temperatur von 75 °C verlassende Milch gelangt sodann zu einem Druckregelventil 7, welches mit einer Verstell- und Steuereinrichtung 8 versehen ist, an welcher der vorgegebene Arbeitsdruck von 6 bar eingestellt wird, der von der Vorlaufpumpe 4 als Druckerzeuger erzeugt worden ist. Dieser Arbeitsdruck ist keineswegs beliebig, sondern wird durch die Temperatur des Heizmittels bestimmt, bzw. einen Druck der grösser ist als der Verflüchtigungsdruck der in den zu erwärmenden NoG-Medien zu erhaltenden flüchtigsten Komponente, bei der höchsten Temperatur welcher die NoG-Medien beim Erwärmen ausgesetzt sind, wie weiter unten noch im einzelnen erläutert ist.

Von dem Druckregelventil 7 gelangt die Milch nunmehr mit einer Temperatur von ca. 75 °C und einem Druck von 6 bar über eine Leitung 9 zu einer Homogenisiereinrichtung 11, in welcher die Milch beim Homogenisieren einem hohen Druck unterworfen wird, wobei sie nach dem Verlassen der Homogenisiereinrichtung 11 über die Leitung 12 indes wiederum im wesentlichen die Temperatur- und Druckkonditionen besitzt wie in der Leitung 9, also vor dem Eintreten in die Homogenisiereinrichtung 11, und über die Leitung 12 in einen weiteren Wärmeaustauscher 13 gelangt, in dem sie – durch die auf 140 °C erwärmte, zurückströmende bzw. zur Verpackungsstation 14 strömende Milch – auf 110 °C erwärmt wird.

Mit dieser Temperatur und dem am Druckregelventil 7 bzw. 27 eingestellten Arbeitsdruck von 6 bar tritt die Milch sodann über die bzw. aus der Leitung 16 in einen Wärmeaustauscher 17 ein, welcher der eigentlichen Ultrahocherhitzung der Milch auf 140 °C dient. Der Wärmeaustauscher 17 wird durch Heisswasser von 156 °C erwärmt, welches unter dem dieser Temperatur entsprechenden Dampfdruck von 5,6 bar steht und dem Wärmeaustauscher 17 über eine Leitung 18 zuströmt, sowie den Wärmeaustauscher 17 über eine Leitung 19 wieder verlässt. Vor dem Eintritt in den Wärmeaustauscher 17 befindet sich in der Leitung 18 ein ebenfalls mit einer Verstell- und Steuereinrichtung 20 versehenes Regelventil 21, mit dem die Erhitzungstemperatur eingestellt bzw. selbsttätig geregelt wird. Die Austrittsleitung 19 weist u.a. einen Kondensatableiter 22 auf.

In der Austrittsleitung 23 aus dem Wärmeaustauscher 17 hat die Milch mithin eine vorgegebene Temperatur von 140 °C und steht unter einem Druck von 6 bar. Dieser Arbeitsdruck von 6 bar ist ersichtlich bestimmungsgemäss grösser als der der Temperatur von 140 °C entsprechende Dampfdruck und darüber hinaus auch noch etwas grösser als derjenige Dampfdruck, welcher der höchsten auftretenden Temperatur von 156 °C des Heizmediums Heisswasser entspricht, wobei das erfindungsgemässe Kriterium für den Arbeitsdruck darauf abstellt, dass der Arbeitsdruck (6 bar) wenigstens so gross ist, wie derjenige Dampfdruck (5, 6 bar), welcher der höchsten auftretenden Temperatur des Heizmediums (156 °C) entspricht, bzw. einem Druck der grösser ist als der Verflüchtigungsdruck der in den zu erwärmenden NoG-Medien zu erhaltenden flüchtigsten Komponente, bei der höchstens Temperatur welcher die NoG-Medien beim Erwärmen ausgesetzt sind, so dass es im Wärmeaustauscher 17 nicht zu Siedeerscheinungen, den damit verbundenen Bläschenbildungen, dem daraus resultierenden schlechten Wärmeübergang, dem hieraus folgenden Wärmestau und letztlich zu Ansatz- und Anbrennerscheinungen kommen kann.

Der Arbeitsdruck von 6 bar ist aber nicht nur im Bereich des Wärmeaustauschers 17 vorhanden, sondern auch in den Wärmeaustauschern 13 und 6 (obwohl er dort ersichtlich etwas kleiner sein könnte), da die erwärmte (=ultrahocherhitzte) Milch dem Wärmeaustauscher 13 über die Leitung 23 ja mit einer Temperatur von 140 °C zuströmt und (zwecks Wärmerückgewinnung) im Wärmeaustauscher 13 ebenso wie in dem Wärmeaustauscher 6 als Heizmedium für die (vorzuwärmende) Vorlaufmilch dient, die im Wärmeaustauscher 13 von 75 °C auf 110 °C und im Wärmeaustauscher 6 von 5 °C auf 75 °C vorzuwärmen ist, so dass es auch in den Wärmeaustauschern 13 und 6 zu den bekannten nachteiligen Wirkungen kommen könnte, wenn dort nicht erfindungsgemäss ein Arbeitsdruck vorhanden wäre, der jeweils wenigstens so gross ist wie derjenige Dampfdruck, welcher der höchsten auftretenden Temperatur des Heizmediums (erwärmte Milch von 140 °C) entspricht, bzw. einem Druck der grösser ist als der Verflüchtigungsdruck der in den zu erwärmenden NoG-Medien zu erhaltenden flüchtigsten Komponente, bei der höchsten Temperatur welcher die NoG-Medien beim Erwärmen ausgesetzt sind.

Zwar würde es ersichtlich ausreichen, in den Wärmeaustauschern 13, 6 den Arbeitsdruck auf (wenigstens) 3,69 bar einzustellen, da der Sättigungsdruck von Wasser, der bei dem Medium Milch im Hinblick auf deren Konsistenz zumindest in erster Näherung angesetzt werden kann, für 140 °C 3,685 bar beträgt und innerhalb der Wärmeaustauscher 13 bzw. 6 zwangsläufig noch ein gewisses Wärmegefälle vorhanden ist, doch hat es sich aus verschiedenen Gründen als zweckmässig erwiesen, den im Bereich des Wärmeaustauschers 17 vorgegebenen, eingestellten Arbeitsdruck auch in diesem Bereich der Vorrichtung herrschen zu lassen, und zwar u.a. deswegen, weil hierdurch ersichtlich der apparative Aufwand zu reduzieren ist, und im übrigen u.a. auch deshalb, weil – wie oben bereits ausgeführt – es sich gezeigt hat, dass Veränderungserscheinungen verschiedener Bestandteile der Milch nicht allein von der Temperatur abhängen, sondern darüber hinaus auch von dem jeweiligen Druck, unter dem die Milch bei einer bestimmten Temperatur beaufschlagt wird, wobei diese Veränderungserscheinungen geringer werden bzw. sogar auszuschliessen sind, wenn ein höherer Druck herrscht als derjenige Dampf- bzw. Sättigungsdruck, welcher der jeweiligen Temperatur entspricht, nämlich einem Druck, der grösser ist als der Verflüchtigungsdruck der in den zu erwärmenden NoG-Medien zu erhaltenden flüchtigsten Komponente, bei der höchsten Temperatur, welcher die NoG-Medien beim Erwärmen ausgesetzt sind.

Aus dem Wärmeaustauscher 6 gelangt die Milch sodann nach Abgabe eines erheblichen Teils ihrer fühlbaren Wärme über eine Leitung 24 und ein ebenfalls mit einer Verstell- und Steuereinrichtung 26 versehenes Druckregelventil 27 zu einem Kühler 28, der über eine Wasserleitung 29 mit Kühlwasser beaufschlagt ist, und von dort aus zur Verpackungsstation 14.

Es sei noch darauf verwiesen, dass es mit der erfindungsgemässen Vorrichtung bzw. Anlage durchaus möglich ist, ohne einen Kühler 28 zu arbeiten, da der Wärmerückgewinn in den Wärmeaustauschern 13 und 6 aufgrund der erfindungsgemässen Arbeitsweise beachtlich grösser ist als dieses beim Stand der Technik möglich ist (dort führt eine zu lange Verweilzeit der Milch in einem der Wärmerückgewinnung dienenden Wärmeaustauscher zu einer weiteren Qualitätsverschlechterung der Milch), so dass die Milch den Wärmeaustauscher 6 mit einer Endtemperatur von ca. 35 °C und weniger verlassen kann und demgemäss ggf. ohne zusätzliche Kühlung mittels eines Kühlers 28 der Verpackungsstation 14 zugeführt und dort verpackt werden kann.

Es sei noch nachgetragen, dass es bei einer Beheizung des Wärmeaustauschers 17 mittels Heisswasser von 156 °C zu einer Abkühlung des die Wärmeaustauscher 17 über die Leitung 18 zuströmenden Heisswassers auf ca. 120 °C kommt, wobei Heisswasser die Vorrichtung dann letztlich über einen Leitungsabschnitt 19' verlässt, während es bei einer Dampfbeheizung des Wärmeaustauschers 17 unter 156 °C praktisch nicht zu einer Abkühlung des Dampfes kommt, so dass dieser die Wärmeaustauscher 17 praktisch mit derselben Temperatur wieder verlässt, wobei gebildetes Kondensat durch den Kondensatableiter 22 abgeführt wird.

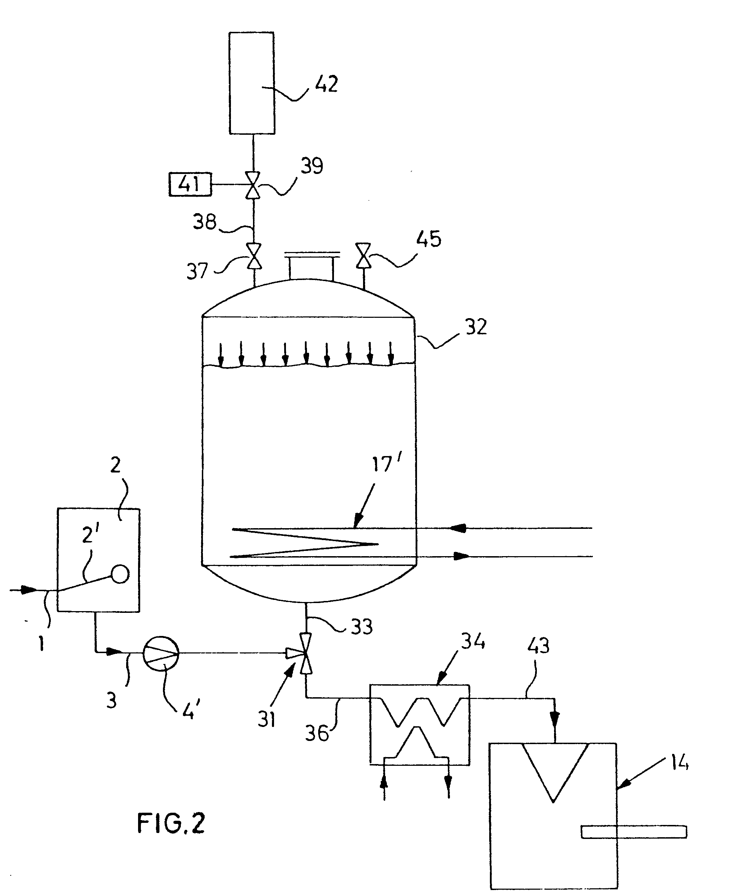

Fig. 2 zeigt eine Variante einer erfindungsgemässen Vorrichtung, die zum Erwärmen eines Milchproduktes wie Pudding, Kakao od. dgl. dient, ab aber auch beispielsweise zum Garen von Nahrungsmitteln benutzt werden kann.

Auch bei dieser Vorrichtung erfolgt die Zufuhr des zu erwärmenden Milchproduktes durch eine Zuführleitung 1 und ein Vorlauf-Schwimmgefäss 2 mit einem Schwimmer 2' und die hier als Medium angenommene Puddingmasse gelangt sodann über eine Leitung 3 und eine Vorlaufpumpe 4' zu einem Dreiwegeventil 31, welches einerseits mit einer zu einem Erhitzungsbehälter 32 führenden Leitung 33 und andererseits mit einer zu einem Kühler 34 führenden Leitung 36 in Verbindung steht.

Im unteren Abschnitt des Erhitzungsbehälters 32 ist ein Wärmeaustauscher 17' angeordnet, der als Heiz- bzw. Kühlschlange ausgebildet ist. In den oberen Abschnitt des Erhitzungsbehälters 32 mündet über ein Absperrventil 37 eine Leitung 38, die an ihrem dem Absperrventil 37 abgekehrten Ende mit einem Druckregelventil 39 in Verbindung steht, welches mit einer Verstell- und Steuereinrichtung 41 versehen ist und andererseits mit einem unter Druck stehenden Stickstoffreservoir 42 als Druckerzeuger.

Aus dem Kühler 34 führt eine Leitung 43 zu einer Verpackungsstation 14.

Ausser dem Absperrventil 37 ist an dem oberen Abschnitt des Erhitzungsbehälters 32 noch ein Sicherheits- oder Überströmventil 45 angeschlossen.

Auch bezüglich des Gegenstandes gemäss Fig. 2 sei ausdrücklich darauf hingewiesen, dass es sich hierbei um eine kompakte Vorrichtung wie auch um eine Anlage handeln kann, je nach dem, welche Anforderungen insbesondere auch hinsichtlich der Durchsatzleistung gestellt werden. Insbesondere kann es sich – ggf. unter Vereinfachung, nämlich insbesondere unter Fortlassung des Vorlauf-Schwimmergefässes 2, der Pumpe 4', des Dreiwegeventils 31, des Kühlers 34 und der Verpackungsstation 14 sowie der die vorgenannten Teile verbindenden Leitungen – beim Gegenstand gemäss Fig. 2 auch um eine kompakte Kleinvorrichtung handeln, wie sie in Einzel- oder Familienhaushalten zum Einsatz kommt. Dabei wäre dann mithin der Erhitzungsbehälter 32 mehr oder weniger in der Art eines Kochtopfes ausgestaltet, an den – zweckmässigerweise, aber nicht notwendigerweise, über ein Druckregelventil – ein Druckgasreservoir 42 in der Art einer Patrone angeschlossen ist, wobei sich eine solche Vorrichtung ersichtlich grundsätzlich von den bekannten sog. «Druckkochtöpfen» unterscheidet, da es bei diesen bestimmungsgemäss lediglich zum Aufbau des Dampfdruckes als Arbeitsdruck kommen kann, wobei bei einem Überschreiten des Dampfdruckes das Sicherheitsventil 45 in Funktion tritt und selbsttätig für einen Druckausgleich auf maximal Dampfdruck sorgt, während bei einer erfindungsgemässen Ausgestaltung eines derartigen Kochtopfes der mittels des Druckgasreservoirs 42 im allgemeinen über ein Druckregelventil einzustellende Druck – nach entsprechender beizugebender Vorschrift – erfindungsgemäss, und damit planmässig, grösser sein soll als der jeweilige Dampfdruck, und zwar in jeweiliger Abhängigkeit von der Temperatur der benutzten Heizplatte. Da die Heizplattentemperaturen für bestimmte Herde in Abhängigkeit von der jeweiligen Schaltereinstellung bekannt sind, ist es mithin ein leichtes, dem Benutzer über eine entsprechende Kongruenzliste den jeweils am Druckregelventil 39 einzustellenden Arbeitsdruck in Abhängigkeit von der jeweiligen Schalterstellung für eine Heizplatte vorzugeben.

Die Wirkungsweise der Vorrichtung gemäss Fig. 2 ist ersichtlich grundsätzlich sehr ähnlich derjenigen, wie sie weiter oben unter Bezugnahme auf Fig. 1 beschrieben worden ist:

Das zu erwärmende Medium gelangt über die Zuführleitung 1 und das Vorlauf-Schwimmergefäss 2 als Durchfluss-Regelorgan in die Leitung 3 zur Vorlaufpumpe 4', wobei das Dreiwegeventil 39 so gestellt ist, dass es zunächst über die Leitung 33 in den Erhitzungsbehälter 32 gepumpt wird. Sodann wird in Abhängigkeit von der am Wärmeaustauscher 17' vorgesehenen Temperatur des Heizmediums bei geöffnetem Absperrventil 37 am Druckregelventil 39 ein Arbeitsdruck eingestellt, der grösser ist als der Dampfdruck, welcher der Temperatur des Heizmediums entspricht, welches durch den Wärmeaustauscher 17' strömt, und es kann sodann die Erwärmung vorgenommen werden.

Nach erfolgter Erwärmung des Mediums im Wärmeaustauscher 17' kann ggf. ein Kühlmedium durch diesen geschickt werden, um bereits eine (Vor-)Kühlung vorzunehmen, oder es kommt lediglich zu einem Abschalten des Zustroms von Heizmedium, und das Dreiwegeventil 31 wird bzgl. der Leitungen 33, 36 auf Durchgang geschaltet, so dass das erwärmte Medium sodann über die Leitung 36 in den Kühler 34 strömt, dort auf Verpackungstemperatur abgekühlt wird und aus dem Kühler 34 über die Leitung 43 in die Verpackungsstation 14 gelangt, wo es verpackt wird.

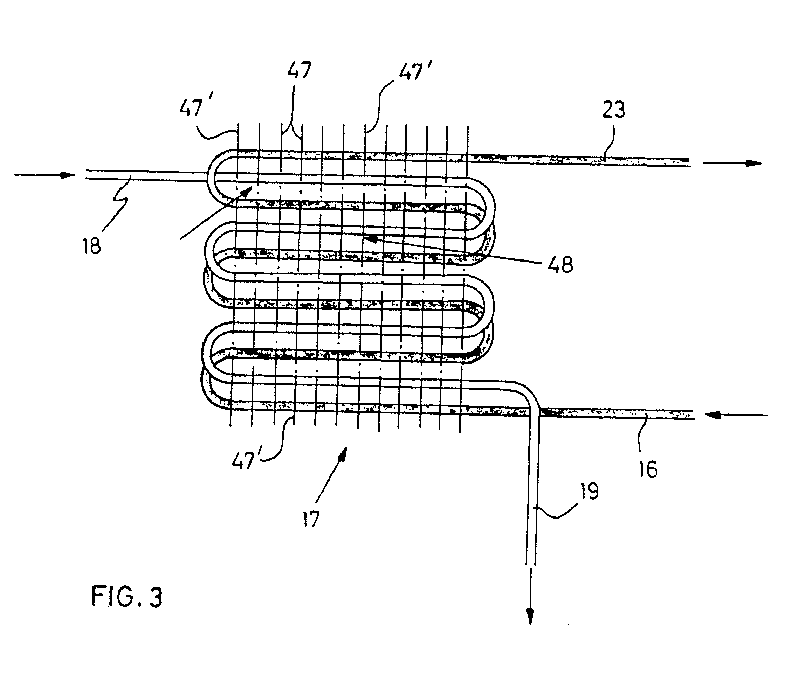

Fig. 3 zeigt in einer etwas schematisierten Darstellung einen Wärmeaustauscher, wie er insbesondere für den Wärmeaustauscher 17 bei der Ausgestaltung gemäss Fig. 1, aber auch für die weiteren erwärmten Wärmeaustauscher, in besonderer Weise geeignet ist und anschliessend am Beispiel des Wärmeaustauschers 17 (Fig. 1) erläutert werden soll.

Die vom in Fig. 3 nicht dargestellten Regelventil 21 (s. Fig. 1) kommende Zulaufleitung 18 des Wärmeaustauschers 17 für das Heizmedium Dampf oder Heisswasser, welches dem Wärmeaustauscher 17 mit 156 °C zuströmt, ist gleichsam schlangenförmig gekrümmt. Das gleiche gilt für den die Milch führenden Teil des Wärmeaustauschers 17, dem die auf 110 °C vorerwärmte Milch unter dem Arbeitsdruck von 6 bar zuströmt, und den sie über die Leitung 23 wieder verlässt.

Die schlangenförmigen Abschnitte des das Heizmedium führenden Leitungsteils 18/19 bzw. des die Milch führenden schlangenförmigen Abschnittes 16/23 des Wärmeaustauschers 17 sind jeweils an ihrer Aussenseite mit Lamellen 47 versehen, wobei die Lamellen 47 jeweils zwei einander benachbarte Leitungsabschnitte des das Heizmittel bzw. die Milch führenden Leitungsteils des Wärmeaustauschers 17 umfassen, nicht aber bis zum nächsten Leitungsabschnitt durchgehen, um ein durch die Lamellen 47 erzeugtes Wärmegefälle zu verhindern. Demgemäss befinden sich – in Fig. 3 von oben nach unten gesehen – zwischen einander in deren Längsrichtung benachbarten Lamellen 47 jeweils «Spalte» bzw. gegenseitige Abstände 48, die lediglich bei vereinfachten, als Stützlamellen zu bezeichnenden Lamellen 47' nicht vorhanden sind, um dem gesamten Wärmeaustauscher. 17 eine innere Konstruktionsfestigkeit zu geben. Derartige Stützlamellen 47 sind bzgl. der einander in Fig. 3 von oben nach unten nachgeordneten Schlangenpaare versetzt zueinander angeordnet, d.h. auch eine Stützlamelle 47' endet – weiter unten als die Normallamellen 47 – unter Bildung eines Lamellenabstandes 48 mit Abstand zu der in ihrer Längsrichtung fluchtenden benachbarten Lamelle 47, so dass insgesamt zwar eine hinreichende Konstruktionsfestigkeit vorhanden ist, aber kein durchgehender Wärmetransport über die Lamellen auf weiter unten liegende Rohrschlangen stattfinden kann.

Aus Fig. 3 ist erkennbar, dass der Wärmeaustauscher 17 (im vorliegenden Fall) zwei jeweils im wesentlichen parallel zueinander verlaufende Leitungen (18/19 bzw. 16/23 aufweist, die mit an ihrer Aussenseite angeordneten, quer verlaufenden Lamellen 47, 47' verbunden und im Gegenstrom durchströmt sind, wobei die beiden Leitungen 18/19 bzw. 16/23 mit gegenseitigem Abstand zueinander angeordnet sind.

### Bezugszeichenliste
### (List of Reference numerals

| 1 | Zuführleitung | 1 |
|---|---|---|
| 2 | Vorlauf-Schwimmgefäss  2'Schwimmer | 2 |
| 3 | Leitung (2/4/6) | 3 |
| 4' | Vorlaufpumpe | 4 |
| 5 | – | 5 |
| 6 | Wärmeaustauscher | 6 |
| 7 | Druckregelventil | 7 |
| 8 | Verstell- und Steuereinrichtung | 8 |
| 9 | Leitung | 9 |
| 10 | – | 10 |
| 11 | Homogenisiereinrichtung | 11 |
| 12 | Leitung | 12 |
| 13 | Wärmeaustauscher | 13 |
| 14 | Verpackungsstation | 14 |
| 15 | – | 15 |
| 16 | Leitung | 16 |
| 17' | Wärmeaustauscher | 17 |
| 18 | Leitung | 18 |
| 19 | Leitung | 19 |
| 20 | Verstell- und Steuereinrichtung | 20 |
| 21 | Regelventil | 21 |
| 22 | Kondensatableiter | 22 |
| 23 | Leitung | 23 |
| 24 | Leitung | 24 |
| 25 | – | 25 |
| 26 | Verstell- und Steuereinrichtung | 26 |
| 27 | Druckregelventil | 27 |
| 28 | Kühler | 28 |
| 29 | Wasserleitung | 29 |
| 30 | – | 30 |
| 31 | Dreiwegeventil | 31 |
| 32 | Erhitzungsbehälter | 32 |
| 33 | Leitung | 33 |
| 34 | Kühler | 34 |
| 35 | – | 35 |
| 36 | Leitung | 36 |
| 37 | Absperrventil | 37 |
| 38 | Leitung | 38 |
| 39 | Druckregelventil | 39 |
| 40 | – | 40 |
| 41 | Verstell- und Steuereinrichtung | 41 |
| 42 | Stickstoffreservoir | 42 |
| 43 | Leitung | 43 |
| 44 | – | 44 |
| 45 | Sicherheits- oder Überströmventil | 45 |
| 46 | – | 46 |
| 47 | Lamellen   47'Stützlamellen | 47 |
| 48 | Lamellenabstände | 48 |
| 49 | | 49 |
| 50 | | 50 |
| 51 | | 51 |
| 52 | | 52 |
| 53 | | 53 |
| 54 | | 54 |
| 55 | | 55 |
| 56 | | 56 |
| 57 | | 57 |
| 58 | | 58 |
| 59 | | 59 |
| 60 | | 60 |
| 61 | | 61 |
| 62 | | 62 |
| 63 | | 63 |
| 64 | | 64 |
| 65 | | 65 |

### Patentansprüche

1. Verfahren zum schonenden Erwärmen mit-Hilfe von Wärmeaustauschern von Nahrungs- oder Genussmitteln (= NoG-Medien), insbesondere im flüssigen Zustand mittels eines Heizmediums, dadurch gekennzeichnet, dass das zu erwärmende Medium vor und während dem Erwärmen unter einen Arbeitsdruck gesetzt wird, der wenigstens so gross ist wie derjenige Dampfdruck, den das NoG-Medium bei der höchsten auftretenden Temperatur des Heizmediums aufweist.

2. Verfahren nach Anspruch 1, dadurch gekennzeichnet, dass der Arbeitsdruck grösser ist als derjenige Dampfdruck, welcher der höchsten auftretenden Temperatur des Heizmediums entspricht.

3. Verfahren nach einem oder mehreren der vorhergehenden Ansprüche, dadurch gekennzeichnet, dass der Arbeitsdruck einstellbar ist.

4. Verfahren nach einem oder mehreren der vorhergehenden Ansprüche, dadurch gekennzeichnet, dass das NoG-Medium mit einem unter Druck stehenden Gas beaufschlagt wird.

5. Verfahren nach Anspruch 4, dadurch gekennzeichnet, dass das NoG-Medium mit einem Inertgas beaufschlagt wird.

6. Verfahren nach Anspruch 5, dadurch gekennzeichnet, dass das NoG-Medium mit Stickstoff beaufschlagt wird.

7. Verfahren nach Anspruch 5, dadurch gekennzeichnet, dass das NoG-Medium mit Edelgas beaufschlagt wird.

8. Vorrichtung zum schonenden Erwärmen von insbesondere flüssigen Nahrungs- oder Genussmitteln mittels eines Heizmediums zur Durchführung des Verfahrens nach einem oder mehreren der vorhergehenden Ansprüche, mit einem beheizbaren Aufnahmemittel für das zu erwärmende NoG-Medium, dadurch gekennzeichnet, dass das Aufnahmemittel (16/23, 32) in an sich bekannter Weise mit wenigstens einem Wärmeaustauscher (17, 13, 6; 17') in Verbindung steht und mittels eines Druckerzeugers (4; 42) unter einen Arbeitsdruck zu setzen ist, der wenigstens so gross ist wie derjenige Dampfdruck, welcher höchstens im Bereich des Wärmeaustauschers (17, 13, 6; 17') auftretenden Temperatur des Heizmediums für den Wärmeaustauscher entspricht.

9. Vorrichtung nach Anspruch 8, dadurch gekennzeichnet, dass der Druckerzeuger eine Pumpe (4) aufweist, mittels welcher das zu erwärmende NoG-Medium vor der Erwärmung unter Druck zu setzen ist.

10. Vorrichtung nach Anspruch 8, dadurch gekennzeichnet, dass der Druckerzeuger eine unter Druck stehende Gasquelle (42) aufweist, aus welcher das Aufnahmemittel (32) mit unter einem vorgegebenen Druck stehenden Gas zu beaufschlagen ist.

11. Vorrichtung nach Anspruch 10, dadurch gekennzeichnet, dass die Gasquelle eine Inertgasquelle ist.

12. Vorrichtung nach einem oder mehreren der Ansprüche 8 bis 11, dadurch gekennzeichnet, dass der Arbeitsdruck mittels einer Druckregeleinrichtung (7, 27; 39) veränderbar ist.

13. Vorrichtung nach einem oder mehreren der Ansprüche 8 bis 12, dadurch gekennzeichnet, dass mehrere Wärmeaustauscher (17; 13; 6) vorgesehen sind.

14. Vorrichtung nach Anspruch 13, dadurch gekennzeichnet, dass ein mit einem Heizmedium wie Sattdampf, Heizwasser oder dergleichen beschickter Wärmeaustauscher (17) vorhanden ist, mittels dessen das NoG-Medium zu erwärmen ist.

15. Vorrichtung nach Anspruch 13 oder 14, dadurch gekennzeichnet, dass ein mit dem erwärmten NoG-Medium als Heizmittel beschickter weiterer Wärmeaustauscher (13, 6) vorhanden ist, mit dem das der Erwärmung zuzuführende NoG-Medium vorzuwärmen ist.

16. Vorrichtung nach einem oder mehreren der Ansprüche 8 bis 15, dadurch gekennzeichnet, dass der/die Wärmeaustauscher (17, 13, 6) als Gegenstromwärmeaustauscher ausgebildet sind.

17. Vorrichtung nach einem oder mehreren der Ansprüche 8 bis 16, dadurch gekennzeichnet, dass ein Wärmeaustauscher (17, 13, 6) wenigstens zwei im wesentlichen parallele Leitungen (18/19 bzw. 16/23) aufweist, die mit an ihrer Aussenseite angeordneten, im wesentlichen quer zu den Leitungen verlaufenden Lamellen (47, 47') verbunden sind.

18. Vorrichtung nach Anspruch 17, dadurch gekennzeichnet, dass die Leitungen (18/19 bzw. 16/23) mit gegenseitigem Abstand übereinander angeordnet sind.

19. Vorrichtung nach Anspruch 17 oder 18, dadurch gekennzeichnet, dass die Leitungen (18/19 bzw. 16/23) im wesentlichen schlangenförmig ausgebildet sind, wobei die Lamellen (47) jeweils zwei einander benachbarte Leitungsabschnitte miteinander verbinden und im Abstand zu benachbarten Lamellen (47) angeordnet sind, ihrerseits wiederum zwei einander benachbarte Leitungsabschnitte miteinander verbinden.

20. Vorrichtung nach Anspruch 19, dadurch gekennzeichnet, dass einzelne Lamellen (47') jeweils mindestens drei einander benachbarte Leitungen (18/19 bzw. 16/23) miteinander verbinden.

21. Verfahren nach einem oder mehreren der Ansprüche 1 bis 7, dadurch gekennzeichnet, dass bei Erwärmung des NoG-Mediums an verschiedenen Stellen überall der gleiche Arbeitsdruck herrscht.

**Revendications**

1. Procédé de chauffage avec ménagement de produits alimentaires liquides à l'aide d'échangeurs de chaleur, en particulier à l'état liquide au moyen d'un fluide chauffant, caractérisé en ce que le produit à chauffer est, pendant l'échauffement, mis sous une pression de travail au moins aussi élevée que la pression de vapeur que le produit alimentaire liquide présente à la température la plus élevée du fluide chauffant.

2. Procédé suivant revendication 1, caractérisé en ce que la pression de travail est supérieure à la pression de vapeur correspondant à la température la plus élevée du fluide chauffant.

3. Procédé suivant une ou plusieurs des revendications qui précèdent, caractérisé en ce que la pression de travail est réglable.

4. Procédé suivant une ou plusieurs des revendications qui précèdent, caractérisé en ce qu'un gaz sous pression est appliqué au produit alimentaire liquide.

5. Procédé suivant revendication 4, caractérisé en ce qu'un gaz inerte est appliqué au produit alimentaire liquide.

6. Procédé suivant revendication 5, caractérisé en ce que de l'azote est appliqué au produit alimentaire liquide.

7. Procédé suivant revendication 5, caractérisé en ce qu'un gaz rare est appliqué au produit alimentaire liquide.

8. Installation de chauffage avec ménagement en particulier de produits alimentaires liquides au moyen d'un fluide chauffant, pour la réalisation du procédé suivant une ou plusieurs des revendications qui précèdent, avec un organe de réception chauffable pour le produit alimentaire liquide à chauffer, caractérisé en ce que l'organe de réception (16/23, 32) est en liaison de manière connue en soi avec au moins un échangeur de chaleur (17, 13, 6; 17') et est au moyen d'un générateur de pression (4; 42) à placer sous une pression de travail au mons aussi élevée que la pression de vapeur correspondant à la température la plus élevée du fluide chauffant pour l'échangeur de chaleur se présentant dans la gamme de l'échangeur de chaleur (17, 13, 6; 17').

9. Installation suivant revendication 8, caractérisé en ce que le générateur de pression comporte une pompe (4) au moyen de laquelle le produit alimentaire liquide à chauffer doit être mis sous pression avant l'échauffement.

10. Installation suivant revendication 8, caractérisé en ce que le générateur de pression comporte une source de gaz (42) sous pression à partir de laquelle un gaz porté à une pression prédéterminée doit être appliquée à l'organe de réception (32).

11. Installation suivant revendication 10, caractérisé en ce que la source de gaz est une source de gaz inerte.

12. Installation suivant une ou plusieurs des revendications 8 à 11, caractérisé en ce que la pression de travail peut être variée au moyen d'un régulateur de pression (7, 27; 39).

13. Installation suivant une ou plusieurs des revendications 8 à 12, caractérisé en ce que plusieurs échangeurs de chaleur 17; 13; 6) sont prévus.

14. Installation suivant revendication 13, caractérisé en ce qu'il existe un échangeur de chaleur (17) chargé d'un fluide chauffant tel que vapeur saturée, eau de chauffage ou similaire, au moyen duquel le produit alimentaire liquide doit être chauffé.

15. Installation suivant revendication 13 ou 14, caractérisé en ce qu'il existe un autre échangeur de chaleur (13, 6) chargé du produit alimentaire liquide chauffé en tant que moyen de chauffage, avec lequel échangeur de chaleur le produit alimentaire liquide à chauffer doit être préchauffé.

16. Installation suivant une ou plusieurs des revendications 8 à 15, caractérisé en ce que le/les échangeur(s) de chaleur (17, 13, 6) est/sont conçu(s) comme échangeurs de chaleur à contrecourant.

17. Installation suivant une ou plusieurs des revendications 8 à 16, caractérisé en ce qu'un échangeur de chaleur (17, 13, 6) comporte au moins 2 conduites essentiellement parallèles (18/19 ou 16/23) reliées par des lamelles (47, 47') disposées sur leur face extérieur et essentiellement perpendiculaires aux conduites.

18. Installation suivant revendication 17, caractérisé en ce que les conduites (18/19 ou 16/23) sont disposées les unes au-dessus des autres avec écartement réciproque.

19. Installation suivant revendication 17 ou 18, caractérisé en ce que les conduites (18/19 ou 16/23) sont conçues essentiellement en serpentin, les lamelles (47) reliant entre elles chacune deux sections de conduite voisines et disposées écartées par rapport à des lamelles voisines (47) reliant de leur côté entre elles deux sections de conduite voisines.

20. Installation suivant revendication 19, caractérisé en ce que certaines lamelles (47') relient entre elles chacune trois conduites voisines (18/19 ou 16/23).

21. Procédé suivant une ou plusieurs des revendications 1 à 7, caractérisé en ce que lors de l'échauffement du produit alimentaire liquide la même pression de travail règne partout en des points différents.

## Claims

1. Process for the gentle heating of fluid general and luxury foods in particular (= golf-media) by help of heat-exchangers by means of a heat transfer medium, the characteristic feature being that the medium to be heated is put under a working pressure before and during heating which is at least as high as the steam pressure, which golfmedia show at the maximum temperature of the heat transfer-medium.

2. Process according to claim 1, the characteristic feature being that the working pressure exceeds the steam pressure corresponding to the maximum temperature of the heat transfer medium.

3. Process according to one or a plurality of the abovementioned claims, the characteristic feature being that the working pressure may be adjusted.

4. Process according to one or a plurality of the abovementioned claims, the characteristic feature being that the golf-medium is supplied with a gas under pressure.

5. Process according to claim 4, the characteristic feature being that the golf-medium is supplied with an inert gas.

6. Process according to claim 5, the characteristic feature being that the golf-medium is supplied with nitrogen.

7. Process according to claim 5, the characteristic feature being that the golf-medium is supplied with noble gas.

8. Device for the gentle heating of luid general and luxury foods in particular by means of a heat transfer medium for the execution of the process according to one or a plurality of the abovementioned claims including a heatable means for holding the folg medium to be heated. The characteristic features are that the holding means (16/23, 32) is linked with at least one heat exchanger (17, 13, 6; 17') in a way which is generally known and that it has to be put under a working pressure by means of a pressurizer (4; 42) that is at least as high as the steam pressure corresponding to maximum temperature of the heat transfer medium for the heat exchanger to be found in the heat exchanger area (17, 13, 6; 17').

9. Device according to claim 8, the characteristic feature being that the pressurizer comprises a pump (4) which is used to put the golf-medium to be heated under pressure prior to heating.

10. Device according to claim 8, the characteristic feature being that the pressurizer comprises a gas source (42) under pressure which is used to supply the holding means (32) with a gas under a given pressure.

11. Device according to claim 10, the characteristic feature being that the gas source is an inert gas source.

12. Device according to one or a plurality of the claims 8 to 11, the characteristic feature being that the working pressure may be varied by means of a pressure regulator (7, 27; 39).

13. Device according to one or a plurality of the claims 8 to 12, the characteristic feature being that provisions have been made for several heat exchangers (17, 13; 6).

14. Device according to claim 13, the characteristic feature bein the existence of a heat exchanger (17) which is fed with a heat transfer medium such as saturated steam, hot water or the like for the purpose of heating the golf-medium.

15. Device according to claims 13 or 14, the characteristic feature being the existence of another heat exchanger (13, 6) which is fed with the heated golf-medium as heat transfer medium for the purpose of preheating the golf-medium to be supplied for heat treatment.

16. Device according to one or a plurality of the claims 8 to 15, the characteristic feature being that the heat exchanger/s (17, 13, 6) are designed as conterflow heat exchangers.

17. Device according to one or a plurality of the claims 8 to 16, the characteristic feature being that one heat exchanger (17, 13, 6) is provided with at least two mainly parallel ducts (18/19 and 16/23) which are linked with laminae (47, 47') arranged on the outside and mainly running crosswise to the ducts.

18. Device according to claim 17, the characteristic feature being that the ducts (18/19 and 16/23) are stacked at a mutual distance.

19. Device according to claim 17 or 18, the characteristic feature being that the ducts (18/19 or 16/23) largely have the form of a coil with each lamina (47) connecting two adjoining duct sections. They are arranged at a distance to adjoining laminae (47) which, in turn, also connect two adjoining duct sections.

20. Device according to claim 19, the characteristic feature being that individual laminae (47') link at least three adjoining ducts each (18/19 and 16/23).

21. Process according to one or a plurality of the claims 1 to 7, the characteristic feature being that while heating the golf-medium in different places the working pressure is the same everywhere.

FIG.1

FIG.2

3/3

23

48

47'

47

47'

16

19

17

47'

18

FIG. 3